**Europäisches Patentamt**

(19) **European Patent Office**

**Office européen des brevets**

(11) Veröffentlichungsnummer: **0 051 841**
**B1**

(12) **EUROPÄISCHE PATENTSCHRIFT**

(45) Veröffentlichungstag der Patentschrift:
**29.01.86**

(51) Int. Cl.⁴: **B 65 H 31/30,** B 31 B 1/98,
B 65 G 1/06

(21) Anmeldenummer: **81109436.6**

(22) Anmeldetag: **30.10.81**

(54) Vorrichtung zum Speichern von Paketen aus flachen Werkstücken.

(30) Priorität: 10.11.80 DE 3042338
12.02.81 DE 3105154

(43) Veröffentlichungstag der Anmeldung:
**19.05.82 Patentblatt 82/20**

(45) Bekanntmachung des Hinweises auf die Patenterteilung:
**29.01.86 Patentblatt 86/5**

(84) Benannte Vertragsstaaten:
**FR GB IT SE**

(56) Entgegenhaltungen:
**DE - A - 2 557 767**
**DE - B - 1 183 019**
**FR - A - 2 369 191**
**US - A - 3 090 481**

(73) Patentinhaber: **Windmöller & Hölscher,**
**Münsterstrasse 48-52, D-4540 Lengerich i.W. (DE)**

(72) Erfinder: **Feldkämper, Richard, Widumweg 3,**
**D-4540 Lengerich i.W. (DE)**

(74) Vertreter: **Lorenz, Eduard et al, Rechtsanwälte Lorenz,**
**Eduard - Seidler, Bernhard Seidler, Margrit - Gossel,**
**Hans-K. Philipps, Ina, Dr. Widenmayerstrasse 23,**
**D-8000 München 22 (DE)**

ACTORUM AG

## Beschreibung

Die Erfindung betrifft eine Vorrichtung zum Speichern von Paketen aus flachen Werkstücken nach dem Oberbegriff des Patentanspruchs 1.

Bei einer aus der DE-PS 25 57 767 bekannten Vorrichtung dieser Art is ein von einem zuführenden Förderband mit Paketen beschickter Röllchenförderer vorgesehen, von dem die Pakete wahlweise einem an diesen in dessen Förderrichtung anschliessenden Speicherförderband oder durch Querverschiebung mittels eines Schiebers einem parallel zu diesem angeordneten zweiten Röllchenförderer zugeführt werden können, an den die die Pakete abfördernde Fördereinrichtung anschliesst. Das Speicherförderband kann reversierbar angetrieben werden, so dass die auf diesem gespeicherten Pakete nacheinander zu dem ersten Röllchenförderer zurückgeführt werden können, von dem diese sodann durch den Schieber quer auf den parallel zu diesem angeordneten zweiten Röllchenförderer zum Abtransport durch die abführende Fördereinrichtung verschoben werden. Diese bekannte Speichereinrichtung weist den Nachteil auf, dass sie trotz einer nur geringen Speicherkapazität eine grosse Länge aufweist, die häufig nicht vorhanden ist oder aus Wirtschaftlichkeitsgründen nicht bereitgestellt werden kann.

Aufgabe der Erfindung ist es daher, eine Speichereinrichtung zu schaffen, die bei einfacher Ausgestaltung und geringerem Platzbedarf eine grössere Speicherkapazität hat.

Erfindungsgemäss wird diese Aufgabe durch die kennzeichnenden Merkmale des Patentanspruchs 1 gelöst. Die erfindungsgemässe Vorrichtung lässt sich besonders raumsparend installieren, da die Pakete in mehreren Ebenen übereinander gespeichert werden. Zur Übernahme der Pakete von der zuführenden Fördereinrichtung oder den gestellfesten Tragplatten oder Rosten werden diese durch die Schieber jeweils auf die in derselben Ebene gegenüberliegenden Tragplatten oder Roste verschoben. Von diesen werden diese nach Absenken oder Anheben um eine Etagenhöhe auf die freien Speicherplätze der gestellfesten Tragplatten oder Roste oder auf die abführende Fördereinrichtung verschoben. Je nach dem gewählten Steuerprogramm können eine oder beide Gruppen der Tragplatten oder Roste mit Paketen belegt sein. Selbst wenn die Pakete in den Gruppen in Reihen gespeichert sind, lassen sich einzelne Pakete gesondert durchschieben.

Das Speichern von Paketen in Etagen übereinander ist an sich bekannt. Bei einer aus der DE-AS 13 01 707 bekannten Vorrichtung bestehen die übereinander angeordneten Tragplatten aus sich unter den Paketen öffnenden Böden, so dass die Pakete unter Schwerkraftwirkung von Etage zu Etage fallen können. Hierbei ist aber nicht gewährleistet, dass die Pakete ihre kantengerade Form behalten.

Weiterhin ist es beispielsweise aus der DE-OS 16 11 712 bekannt, Speicherförderbänder in Etagen übereinander anzuordnen, was aber einen erhöhten konstruktiven Aufwand bedingt, weil die einzelnen Etagen durch schwenkbare Förderbänder miteinander verbunden werden müssen.

Vorteilhafte Ausgestaltungen der Erfindung sind Gegenstand der Ansprüche 2 bis 8.

Ausführungsbeispiele der Erfindung werden nachstehend anhand der Zeichnung näher erläutert. In dieser zeigt

Fig. 1 eine Vorderansicht der Speichereinrichtung für Pakete in schematischer Darstellung und

Fig. 2 eine Abwandlung der Speichereinrichtung nach Fig. 1 mit wippenartig verbundenen Rahmen für die Tragplatten.

Von einer nicht dargestellten Bearbeitungsmaschine fertiggestellte Schlauchabschnitte oder Säcke werden zu Paketen 1 aufgesammelt und diese einer Rollenbahn 2 einer Speichereinrichtung 3 einzeln oder in einer Anzahl hintereinander zugeführt. Unter der Rollenbahn 2 sind in mehreren Etagen untereinander und in gleichen Höhenabständen gestellfeste Roste 3 bis 6 mit relativ engem Stababstand angeordnet. Unter dem Rost 6 verläuft eine Rollenbahn 7. Die Rollenbahnen 2 und 7 sowie die Roste 3 bis 6 weisen gleiche Breiten und Längen auf.

Parallel und in gleicher Höhe neben der Rollenbahn 2 und den Rosten 3 bis 6 sind Roste 12 bis 16 vorgesehen, die in der Breite und Länge den Rosten 3 bis 6 gleichen und die jedoch heb- und senkbar angeordnet sind, indem sie miteinander und mit senkrechten Führungen 17, 18 fest verbunden sind.

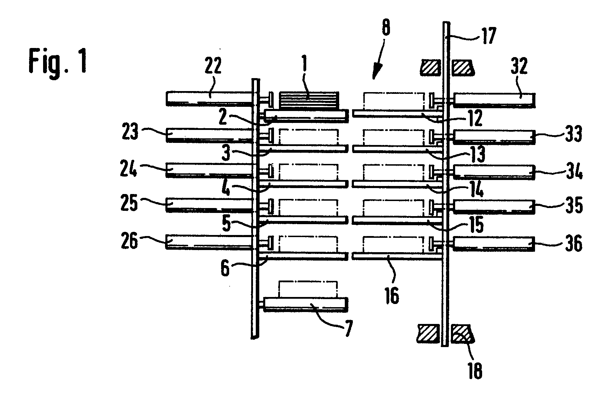

Die Roste 12 bis 16 können, wie in Fig. 1 dargestellt, mit der Rollenbahn 2 bzw. den Rosten 3 bis 6 korrespondieren oder aber durch eine nicht dargestellte Einrichtung um eine Etage abgesenkt werden, so dass sich der Rost 12 auf der Höhe der Rollenbahn 7 befindet.

Der Rollenbahn 2 und den Rosten 3 bis 6 und 12 bis 16 sind Druckmittelzylinder 22 bis 26 und 32 bis 36 zugeordnet, wobei die Druckmittelzylinder 22 bis 26 gestellfest und die Druckmittelzylinder 32 bis 36 zugleich mit den Rosten 12 bis 16 heb- und senkbar sind.

Die Speicherung erfolgt nun derart, dass ein Paket oder eine Reihe von Paketen der Rollenbahn 2 zugeführt wird und die dort aufgereihten Pakete durch Betätigen des Druckmittelzylinders 22 nach rechts auf den Rost 12 verschoben werden.

Die Roste 12 bis 16 werden dann um eine Etage abgesenkt und die auf dem Rost 12 liegenden Pakete durch den Druckmittelzylinder 32 auf den Rost 3 nach links geschoben. Nach Anheben der Roste 12 bis 16 in die Ausgangsstellung wird der Druckmittelzylinder 23 betätigt und die Pakete auf den Rost 13 geschoben. Dieser Zyklus wird so lange wiederholt, unter fortlaufendem Heben und Senken der Roste 12 bis 16, bis die Pakete auf der Rollenbahn 7 angekommen sind.

Zur Speicherung können ausschliesslich die linke Seite, also die Roste 3 bis 6, mit Paketen belegt sein, die rechte Seite, also die Roste 13 bis 16, oder beide Seiten gemischt, je nachdem, wieviele Pakete anfallen.

Die in Fig. 1 dargestellte Speichereinrichtung in Etagenbauweise benötigt nur eine geringe Grundfläche.

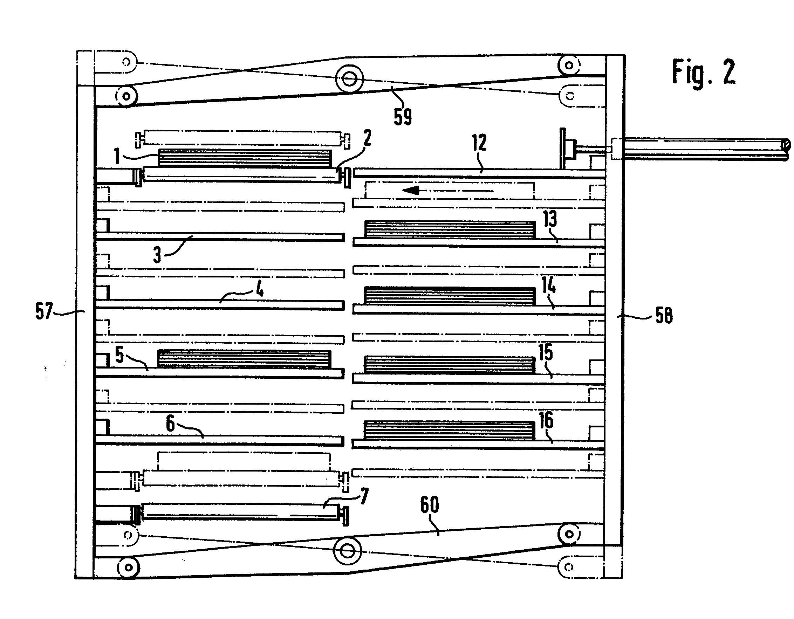

In Fig. 2 ist eine Vorrichtung gezeigt, bei der sowohl die Roste 3 bis 6 als auch die Roste 12 bis 16 in Rahmen befestigt sind, die in vertikaler Richtung auf- und abbeweglich sind. Die Rahmen, 57, 58 sind an die Enden von mittig im Maschinengestell gelagerten zweiarmigen Hebeln 59, 60 angelenkt. Um einen Platzwechsel der Pakete vorzunehmen, ist es lediglich erforderlich, die Rahmen gegensinnig um jeweils etwa eine halbe Etagenhöhe zu verschwenken. In der in vollen Linien eingezeichneten angehobenen Stellung des rechten Rahmens 58 werden die Pakete von der Rollenbahn 2 und den Rosten 3 bis 6 auf die Roste 12 bis 16 geschoben. In der strichpunktiert dargestellten angehobenen Stellung des linken Rahmens 57 werden die Pakete von den Rosten 12 bis 16 auf die Roste 3 bis 6 sowie die Rollenbahn 7 zurückgeschoben.

Der Rost 16 kann bereits durch einen abführenden Förderer ersetzt werden. Bei dieser Ausführungsform liegt der anschliessende Förderer einseitig auf dem abführenden Förderer auf, so dass er mit seinem aufliegenden Teil das Heben und Senken mitmacht.

Die Ebenen der Roste 12 bis 16 können vor dem Abschieben der Pakete von den Rosten 3 bis 6 etwas tiefer liegen als deren Ebenen, so dass ein Anstossen der Pakete an den Stirnkanten der Roste 12 bis 16 vermieden wird. Beim Zurückschieben der Pakete auf die Rosten 3 bis 6 werden diese zweckmässigerweise in entsprechender Weise etwas tiefer abgesenkt. Um entsprechende Verhältnisse bei der Ausführungsform nach Fig. 1 zu erreichen, wird der Hub zweckmässigerweise etwas kleiner gewählt als der Etagenabstand der Roste 3 bis 6 bzw. 12 bis 16.

**Patentansprüche**

1. Vorrichtung zum Speichern von Paketen (1) aus gestapelten Schlauchabschnitten, Säcken oder anderen flachen Werkstücken, mit einer die Pakete in einer Ebene zuführenden Fördereinrichtung (2), mindestens einem diese von der Fördereinrichtung parallel zu sich selbst auf eine seitlich an diese angrenzende Unterlage mit etwa gleichem Niveau verschiebenden Schieber (22), einer Speicherstrecke (3–6, 12–16) und einer die verschobenen Werkstücke abtransportierenden Fördereinrichtung (7), die parallel zur zuführenden Fördereinrichtung (2) verläuft, gekennzeichnet durch folgende Merkmale.

a) die zu- und abführenden Fördereinrichtungen (2, 7) sind mit Abstand übereinander angeordnet;

b) zwischen den Fördereinrichtungen (2, 7) ist mit gleichen Abständen untereinander und zu den Fördereinrichtungen eine erste Gruppe von Tragplatten oder Rosten (3–6) angeordnet;

c) neben der ersten Gruppe von Tragplatten oder Rosten (3–6) ist im Anschluss daran, mit gleichen Abständen untereinander wie diese und parallel dazu verlaufend eine zweite, in der Anzahl um eins grössere Gruppe von Tragplatten oder Rosten (12–16) angeordnet;

d) die zweite Gruppe ist insgesamt derart über etwa einen Tragplatten- oder Rostabstand heb- und senkbar angeordnet, dass in der angehobenen Stellung die oberste Tragplatte bzw. der oberste Rost etwa in der Ebene der oberen Fördereinrichtung und in der abgesenkten Stellung die unterste Tragplatte bzw. der unterste Rost etwa in der Ebene der unteren Fördereinrichtung liegt;

e) an der Aussenseite jeder Tragplatte bzw. jedes Rostes (3–6) (12–16) ist mindestens ein mit Steuereinrichtungen versehener Schieber (23–26, 32–36) angeordnet.

2. Vorrichtung nach Anspruch 1, dadurch gekennzeichnet, dass die zu- und abführenden Fördereinrichtungen (2, 7) aus mit Antrieben versehenen Rollenbahnen bestehen.

3. Vorrichtung nach Anspruch 1 oder 2, dadurch gekennzeichnet, dass die Tragplatten oder die Roste (3–6, 12–16) eine mehreren Paketlängen entsprechende Länge aufweisen und dass jedem auf der zuführenden Fördereinrichtung (2) liegenden Paket (1) und jedem Speicherplatz ein Schieber zugeordnet ist.

4. Vorrichtung nach einem der Ansprüche 1 bis 3, dadurch gekennzeichnet, dass die Schieber aus Leisten bestehen, deren Längen der Länge der Pakete oder Paketreihen entsprechen.

5. Vorrichtung nach Anspruch 1, gekennzeichnet durch die Abänderung, dass die abführende Fördereinrichtung (7) die Stelle des untersten Tragelements (16) der zweiten Gruppe einnimmt.

6. Vorrichtung nach einem der Ansprüche 1 bis 5, dadurch gekennzeichnet, dass die Tragplatten oder Roste und die Fördereinrichtung, auf die Pakete geschoben werden, etwas tiefer liegen als die, von denen sie abgeschoben werden.

7. Vorrichtung nach einem der Ansprüche 1 bis 6, dadurch gekennzeichnet, dass die etagenweise übereinander angeordneten Gruppen von Tragplatten oder Rosten (3–6, 12–16) einschliesslich der Fördereinrichtungen (2, 7) gleichzeitig gegensinnig und jeweils um etwa eine halbe Etagenhöhe heb- und absenkbar angeordnet sind.

8. Vorrichtung nach Anspruch 7, dadurch gekennzeichnet, dass die Tragplatten oder Roste (3–6, 12–16) und die Fördereinrichtungen (2–7) in Rahmen (57, 58) angeordnet sind, die an die Enden von mittig gelagerten zweiarmigen Hebeln (59, 60) angelenkt sind.

**Claims**

1. Apparatus for storing packs (1) of stacked tubular sections, sacks or other flat workpieces, comprising a conveyor (2) for feeding the packs in a plane, at least one pusher (22) for shifting the packs parallel to themselves from the conveyor onto a support, which laterally adjoins the conveyor approximately on the same level, a storage path (3 to 6, 12 to 16) and a conveyor (7), which is parallel to the feeding conveyor (2) and serves to remove the workpieces which have been shifted, characterized by the following features:

a) The feeding and removing conveyors (2, 7) are spaced apart one over the other;

b) a first group of carrying plates or grates (3 to 6) are arranged between the conveyors (2, 7) and are spaced at equal distances from each other and from the conveyors;

c) a second group of carrying plates or grates (12 to 16) in a number which is larger by one than the number of carrying plates or grates (3 to 6) of the first group succeed the carrying plates or grates of the first group and are spaced apart by the same distances as the carrying plates or grates of the first group and are parallel to the latter;

d) the second group are adapted to be raised and lowered in unison approximately by one carrying plate or grate spacing in such a manner that in the raised position the uppermost carrying plate or the uppermost grate extends approximately on the plane of the upper conveyor, and in the lowered position the lowermost carrying plate or the lowermost grate extends approximately in the plane of the lower conveyor;

e) at least one pusher (23 to 26, 32 to 36), which is provided with control means, is provided on the outside of each carrying plate or of each grate (3 to 6, 12 to 16).

2. Apparatus according to claim 1, characterized in that the feeding and removing conveyors (2, 7) consist of roller conveyors provided with drive means.

3. Apparatus according to claim 1 or 2, characterized in that the carrying plates or grates (3 to 6, 12 to 16) have a length which corresponds to a plurality of pack lengths and that a pusher is associated with each of the packs (1) lying on the feeding conveyor (2) and with each storage location.

4. Apparatus according to any of claims 1 to 3, characterized in that the pushers consist of bars having the same length as a pack or a row of packs.

5. Apparatus according to claim 1, characterized by the modification that the removing conveyor (7) replaces the lowermost carrying element (16) of the second group.

6. Apparatus according to any of claims 1 to 5, characterized in that the carrying plates or grates and the conveyor onto which the packs are shifted extend somewhat below those from which they are shifted.

7. Apparatus according to any of claims 1 to 6, characterized in that the groups of carrying plates or grates (3 to 6, 12 to 16) are disposed one over the other in storeys and are so arranged that together with the conveyors (2, 7) they can be respectively raised and lowered in mutually opposite directions by approximately one-half of a storey height at the same time.

8. Apparatus according to claim 7, characterized in that the carrying plates or grates (3 to 6, 12 to 16) and the conveyors (2 to 7) are arranged in frames (57, 58), which are pivoted to the ends of two-armed levers (59, 60) having central pivots.

## Revendications

1. Appareil pour le stockage de paquets (1), de sections tubulaires empilées, de sacs ou d'autres pièces plates, comportant un dispositif de transport (2) pour amener les paquets sur un plan, au moins un poussoir (22) déplaçant les paquets, parallèlement à eux-mêmes, du dispositif de transport sur un support approximativement au même niveau, avoisinant latéralement le dispositif de transport, une voie de stockage (3–6, 12–16) et un dispositif de transport (7) disposé parallèlement au dispositif de transport (2) d'alimentation et qui enlève les pièces déplacées, caractérisé par les caractéristiques suivantes:

a) Les dispositifs de transport d'alimentation et d'enlèvement (2, 7) sont disposés l'un sur l'autres à une certaine distance;

b) entre les dispositifs de transport (2, 7) est disposé à distances égales l'un par rapport à l'autre et par rapport aux dispositifs de transport un premier groupe de plateaux supports ou grilles (3 à 6);

c) un deuxième groupe de plateaux supports ou grille (12–16) dont le nombre dépasse d'un le nombre de plateaux supports ou de grilles (3–6) du premier groupe succède aux plateaux supports ou aux grilles du premier groupe et sont espacés par les mêmes distances que les plateaux supports ou grilles du premier groupe et sont disposés parallèlement à ces derniers;

d) le deuxième groupe est adapté pour être relevé ou abaissé ensemble approximativement de la distance d'espacement d'un plateau support ou d'une grille de manière à ce que dans la position relevée le plateau support ou la grille la plus haute se trouve à peu près sur le plan du dispositif de transport supérieur, et que dans la position abaissée, le plateau support ou la grille la plus basse se trouve approximativement sur le même plan que le dispositif de transport inférieur;

e) du côté extérieur de chaque plateau support ou de chaque grille (3–6, 12–16) se trouve au moins un poussoir (23–26, 32–36) doté de dispositifs de commande.

2. Dispositif selon la revendication 1 caractérisé en ce que les dispositifs de transport (2, 7) d'alimentation et d'enlèvement, consistent en transporteurs à rouleaux pourvus d'entraînements.

3. Dispositif selon la revendication 1 ou 2 caractérisé en ce que les plateaux supports ou les grilles (3–6, 12–16) ont une longueur correspondant à plusieurs longueurs de paquet et qu'à chaque paquet (1) posé sur le dispositif de transport d'alimentation (2) et à chaque poste de stockage correspond un poussoir.

4. Dispositif selon l'une des revendications 1 à 3 caractérisé en ce que les poussoirs consistent en baguettes dont les longueurs correspondent aux longueurs des paquets ou rangés de paquets.

5. Dispositif selon la revendication 1 caractérisé par la modification, à savoir que le dispositif de transport (7) d'enlèvement prend la place de l'élément support (16) le plus bas du deuxième groupe.

6. Dispositif selon l'une des revendications 1 à 5 caractérisé en ce que les plateaux supports ou grilles et les dispositifs de transport sur lesquels les paquets sont glissés se trouvent à un niveau un peu inférieur à celui dont les paquets sont enlevés.

7. Dispositif selon l'une des revendications 1 à 6 caractérisé en ce que les groupes de plateaux supports ou grilles (3–6, 12–16) disposés par étages l'un sur l'autre y compris les dispositifs de transport (2, 7) peuvent être relevés et abaissés simultanément en sens réciproquement opposé et chacun d'environ une demi-hauteur d'étage.

8. Dispositif selon la revendication 7 caractérisé en ce que les plateaux supports ou grilles (3–6, 12–16) et les dispositifs de transport (2–7) sont disposés dans des cadres (57, 58) qui sont pivotés aux extrémités de leviers à deux bras (59, 60) qui ont des pivots centraux.

0 051 841

**Fig. 1**

Fig. 2

0 051 841